# EUROPEAN PATENT SPECIFICATION

(11) **EP 1 550 549 B1**
(45) Date of publication and mention of the grant of the patent: **24.08.2011**
(21) Application number: 03755288.2
(22) Date of filing: 28.05.2003
(51) Int. Cl.: B32B 27/06

(54) **CONTAINER OF BIODEGRADABLE HEAT-RESISTANT HARD RESIN MOLDING**
BEHÄLTER FÜR BIOLOGISCH ABBAUBARE, WÄRMEBESTÄNDIGE HARTE HARZFORMMASSEN
CONTENANT REALISE EN RESINE DURE MOULEE THERMORESISTANTE

(30) Priority: 29.05.2002 JP 2002155111
(43) Date of publication of application: 06.07.2005
(73) Proprietor: Kureha Corporation, Tokyo 103-8552 (JP)
(72) Inventor: YAMANE, Kazuyuki, Kureha Chemical Ind. Co., Ltd., Iwaki-Shi, Fukushima 974-8686 (JP); KAWAKAMI, Yukichika, Kureha Chemical Ind. Co., Ltd., Iwaki-Shi, Fukushima 974-8686 (JP); SATO, Tomoaki, Kureha Chemical Ind. Co., Ltd., Niihari-Gun, Ibaraki 311-3436 (JP); TOBITA, Hisanori, Kureha Chemical Ind. Co., Ltd., Niihari-Gun, Ibaraki 311-3436 (JP); SUZUKI, Takehisa, Kureha Chemical Ind. Co., Ltd., Niihari-Gun, Ibaraki 311-3436 (JP)
(74) Representative: de Lang, Robbert-Jan
(86) International application number: PCT/JP2003/006704
(87) International publication number: WO 2003/099558

(56) References cited:
- EP-A- 0 925 915
- EP-A- 1 449 646
- JP-A- 10 006 445
- JP-A- 10 080 990
- JP-A- 2002 001 890
- JP-A- 2002 105 887
- JP-A- 2002 225 841
- JP-A- 2003 011 286
- JP-A- 2003 072 008
- JP-A- 2003 128 797
- JP-A- 2003 165 181
- US-A- 4 424 242
- Sybil P. Parker, ed.: "McGraw-Hill Dictionary of Scientific and Techni9cal Terms, 5th ed." 1994, McGraw-Hill, Inc. , New York * entries "flexural modulus" and "biodegradability" *
- "entry "flexural modulus"" In: S.P. Parker: "McGraw-Hill Dictionary of Scientific and Technical Terms, Fifth Edition" 1994, McGraw-Hill, Inc. , New York (US)

## Description

### [TECHNICAL FIELD]

The present invention relates to a shaped container of a biodegradable, stiff, heat-resistant and rigid resin, suitable as a temporary preservation container for contents, such as food.

### [BACKGROUND ART]

Polylactic acid and succinic acid-based aliphatic polyesters, etc., have drawn interest as biodegradable resins harmonizable with environment. If they can be used to form a temporary preservation container for food, the container is expected to be disposed without causing garbage by biodegradation thereof after the use, and also expected be composted together with contents such as food after expiry of the relishable period thereof, thus eliminating an operation, such as separation of materials. However, as these resins are inferior in heat resistance, a container made thereof can be softened or deformed when heated for re-warming the food and can sometimes cause overflow of the contents, thus being liable to cause soiling of the surroundings or scald of the user. Further, a container made of these resins is liable to cause oxidative degradation of the contents such as food, due to gas penetration therethrough.

On the other hand, polyglycolic acid is known as a crystalline biodegradable resin having a melting point of 180 °C or higher and a high gas-barrier property, but a relatively thick sheet thereof is liable to cause whitening when shaped under heating, so that the see-through of the resultant shaped container is impaired. Accordingly, though a glycolic acid polymer as represented by polyglycolic acid has been proposed to form a gas-barrier composite film by lamination with another thermoplastic resin, such as polylactic acid and succinic acid-based aliphatic polyester (Japanese Laid-Open Application (JP-A) 10-80990), but the use thereof as a material for a shaped container of a rigid resin has not been substantially practiced.

### [DISCLOSURE OF INVENTION]

In view of the above-mentioned circumstances, a principal object of the present invention is to provide a shaped container of rigid resin which is excellent in biodegradability, stiffness and heat resistance and is suitable as a temporary preservation container of contents, such as food. More specifically, the present invention aims at realizing such a shaped container of rigid resin by a laminate composite shaped container including a glycolic acid polymer as an essential component resin layer.

According to the inventors' study, it has been found that a glycolic acid polymer layer is a resin very suited for providing a shaped container of composite rigid resin as mentioned above excellent in biodegradability, stiffness and heat resistance, if it is disposed together with another biodegradable resin layer in an appropriate positional relationship.

More specifically, according to the present invention, there is provided a shaped container of biodegradable, heat-resistant and rigid resin, having a laminate structure including a glycolic acid polymer layer and another biodegradable resin layer, which has been co-shaped under heating into a shape of an open bowl or parallelepiped so that said another biodegradable resin layer forms at least an outer layer outside the glycolic acid polymer layer, and the resultant container exhibits a flexural modulus EF of at least 980N/mm² / (100 kg/mm²) as measured in a state where a load is applied from the outer resin layer, wherein said another biodegradable resin is selected from the group consisting of lactic acid polymer, succinic acid-based aliphatic polyester, polycaprolactone, omega -hydroxyacetic acid polycondensate, cellulose and starch.

The reason why the glycolic acid polymer layer is extremely suited for providing a composite shaped container having the above-mentioned properties is because it has the following advantageous properties compared with other biodegradable resins, such as lactic acid polymers and succinic acid-based aliphatic polyesters. More specifically, (a) glycolic acid polymer is crystalline and particularly its crystallization speed is remarkably rapid. Moreover, accompanying the crystallization thereof, it provides a resin layer exhibiting a remarkably larger stiffness compared with other biodegradable resins. This property is of course remarkably preferable for providing a rigid resin container. (b) However, because of its crystallinity, if a single layer of glycolic acid polymer is shaped under heating for providing a shaped container by, e.g., deep drawing or blow molding, the shaped container is defectively whitened as described above. As a result of the inventors' further study, however, it has been found that the whitening of the single layer of glycolic acid polymer is principally caused as a result of roughening of the surface at which a tension stress is concentrated, and the whitening can be remarkably alleviated if it is laminated with another biodegradable resin layer thereover and then subjected to shaping under heating. The whitening due to roughening during shaping of the glycolic acid polymer layer surface is caused particularly remarkably on its outer surface subjected to a larger degree of deformation, and accordingly a larger degree of whitening-prevention effect can be attained if another biodegradable resin layer is disposed on an outer surface than an inner surface of the glycolic acid polymer layer. However, a further better whitening-prevention effect can be attained when such another biodegradable resin layer is disposed on both the outer and inner surfaces of the glycolic acid polymer layer. (c) The glycolic acid polymer layer forming the shaped container in lamination with another biodegradable resin layer is crystallized to increase its stiffness during the shaping under heating and optionally performed heat-setting treatment, thereby providing a rigid resin shaped container suitable for temporary preservative storage of food. (In contrast thereto, a lactic acid polymer exhibits a very slow crystallization speed, so that the crystallization thereof hardly proceeds during the heat-setting treatment.) (d) Further, glycolic acid polymer is caused to have a remarkably increased heat resistance as high as not to cause a substantial deformability in lamination with another biodegradable resin layer during 1 minute or longer of heating in a microwave heater. (Incidentally, a succinic acid-based polyester has a very low melting point (of ca. 100 °C) and also a low crystallinity, thus being poor in both heat resistance and rigidity (or stiffness). (e) Glycolic acid polymer has a much higher gas-barrier property compared with not only other biodegradable resins as a matter of course but also EVOH (ethylene-vinyl alcohol copolymer) which is a conventionally used representative gas-barrier resin, as high as ca. 3 times or higher (i.e., ca. 1/3 or lower in terms of an oxygen transmission coefficient) as that of EVOH, so that it can provide, e.g., a bottle shaped therefrom, exhibiting a remarkably enhanced effect of preserving the contents in the bottle. (f) Glycolic acid polymer has a biodegradability comparable to or even higher than those of other biodegradable resins such as lactic acid polymers and succinic acid-based aliphatic polyester resins. Accordingly, a shaped container having a laminate structure consisting essentially of these biodegradable resin layers can be disposed without causing garbage, by biodegradation thereof after the use as a temporary preservation container for food, etc., and can also be composed together with contents such as food after expiry of the relishable period thereof.

The shaped container of biodegradable, heat-resistant and rigid resin according to the present invention has been completed based on the above-mentioned findings.

### [EMBODIMENTS OF THE INVENTION]

### (Glycolic acid polymer)

Glycolic acid polymer is a biodegradable (hydrolysable) and crystalline polyester having a recurring unit represented by a formula (1) below:

-(OCH₂CO)- (1)

It is preferred to use glycolic acid homopolymer (PGA) consisting only of the above recurring unit, but another recurring unit can be contained provided that a structure having a main chain which can be cut by biodegradation (or hydrolysis) is preferred. Preferable structures may include ester structures including carboxylic acid esters and carbonic acid esters, and amide structure. Particularly, an aliphatic ester structure is preferred in view of biodegradability. Examples thereof may include the following:

-(OCHCH₃CO)- (2)

-(OCH₂CH₂CH₂OCO)- (3)

-(OCH₂CH₂CH₂CH₂CO)- (4)

The proportion of such another recurring unit structure is below 50 wt.%, preferably below 30 wt.%, further preferably below 15 wt.% in order to retain the effect of increasing stiffness and heat-resistance due to crystallization.

Further, it is also possible to incorporate another thermoplastic resin in the glycolic acid polymer layer for the purpose of controlling the crystallizability thereof in a relatively small amount (e.g., up to 20 wt.%) within an extent of not adversely affecting the stiffness and heat-resistance.

As for such another thermoplastic resin, it is not impossible to use a general-purpose resin, such as polyethylene, polypropylene, polyvinyl chloride or polystyrene, but in order to increase the content of biodegradable resin, it is preferred to use another biodegradable resin, such as a lactic acid polymer, succinic acid-based aliphatic polyester which is a poly- condensate of succinic acid and ethylene diol or butane diol, polycaprolactone, ω-hydroxyacetic acid polycondensate and Biomax (registered trade mark, available from Du Pont), cellulose or starch.

### (Another biodegradable resin)

As for a constituent resin of said another biodegradable resin for forming the rigid resin shaped container of the present invention together with the glycolic acid polymer layer it is possible to use biodegradable resins, such as a lactic acid polymer, succinic acid-based aliphatic polyester which is a poly- condensate of succinic acid and ethylene diol or butane diol, polycaprolactone, w -hydroxyacetic acid polycondensate and Biomax (registered trade mark, available from Du Pont), cellulose or starch, raised above as examples of another biodegradable resin which can be incorporated in the glycolic acid polymer layer. Among these, it is preferred to laminate a layer of lactic acid polymer which has a relatively good heat-resistance. As an example of such another biodegradable resin, it is also possible to use a regrind (i.e., recovered and re-pulverized product) of a rigid resin shaped container of the present invention. Such a regrind may comprise biodegradable resins, such as glycolic acid polymer, lactic acid polymer and succinic acid-based polyester, can further contain an adhesive resin in some cases, and can be used within an extent of not remarkably lowering the transparency of the shaped container of the present invention.

In the shaped container of the present invention, such another biodegradable resin is disposed as at least an outer layer or an inner layer, preferably as an outer layer, with respect to the glycolic acid polymer layer, but may more preferably be disposed as both an outer and an inner layer so as to provide a structure wherein the glycolic acid polymer layer is sandwiched between a pair of other biodegradable resin layers which can be not identical to each other but most preferably each comprise a lactic acid polymer layer. The resultant shaped container may have a layer structure including at least two layers. Examples of such a layer structure may include: another biodegradable resin/glycolic acid polymer/another biodegradable resin (possibly containing a regrind), and another biodegradable resin/regrind/glycolic acid polymer/another biodegradable resin (possibly containing a regrind). The above-mentioned another biodegradable resin layer can have a two-layer structure of different resins, and in this case, the entire layer structure may comprise, for example, succinic acid-based polyester/lactic acid polymer/glycolic acid polymer/lactic acid polymer, which structure may be provided with easy sealability because the succinic acid-based polyester has a relatively low melting point. In any case, an adhesive layer can be inserted, as desired, between layers.

### (Thickness)

In order to be a rigid resin shaped container having a good stiffness after an appropriate degree of heat treatment, the shaped container of the present invention is required to have a thickness (a total thickness of the glycolic acid polymer layer and another biodegradable resin layer) of averagely at least 100 µm, preferably at least 150 mm, particularly preferably 200 µm or larger. Below 100 100 µm, when the container is caused to receive a relatively heavy food, such as fried food, daily dishes or cooked rice, the container is liable to be warped and the handling thereof is liable to be awkward. The upper limit may be determined principally in view of economical factors and generally 5000 *µ* m or smaller.

Further, in order to ensure a necessary stiffness while retaining the whitening prevention effect owing to the lamination, it is preferred the glycolic acid polymer layer has a thickness which is 2-98 %, more preferably 5-80 % of the total thickness of the glycolic acid polymer layer and another biodegradable resin layer.

### (Adhesive layer)

The shaped container of the present invention can be composed of only the above-mentioned glycolic acid polymer layer and another biodegradable resin layer, and this is preferred in order to increase the biodegradability of the entire container. In the case of once forming a multilayer sheet and then shaping the sheet by secondary processing, such as (deep) drawing or blow forming, etc., however, it is possible to insert an adhesive resin layer in order to enhance the inter-layer bonding strength. As the adhesive resin, epoxy-modified polyolefin, crosslinked ethylene-vinyl acetate copolymer, etc., may preferably be used. The biodegradability of these resins is inferior to the above-mentioned various biodegradable resins, but the load thereof to the environment can be alleviated due to a small amount thereof because the adhesive layer is used in a small thickness of, e.g., ca. 0.5-30 µm. If an adhesive resin having a better biodegradability is developed, such an adhesive resin may suitably be used in the present invention, of course.

### (Shaping under heating)

The shaped container of the present invention can be directly formed by a melt resin forming method, such as multilayer injection molding, by blow molding (stretch blow molding) of a laminate preform of glycolic acid polymer layer and another biodegradable resin layer formed by such a melt-resin forming method, by direct blow molding, inflation, melt-vacuum forming, or by vacuum forming or deep drawing of a once-formed laminate sheet, as a suitably adoptable technique. According to the vacuum forming, the sheet may be pre-heated for 0.5 sec. to 3 min., preferably 1 sec. to 2 min., at 60-120 °C , and shaping the sheet so as to fit to a mold by placing the mold under vacuum. The shaping by the melt vacuum forming may be effected by heating at 160-240 °C, preferably 170-230 °C.

### (Heat treatment)

Through the above-mentioned shaping under heating, the shaped container is provided with increased stiffness and heat-resistance, principally owing to the crystallization of the glycolic acid polymer layer included therein, but can be subjected, as desired, to an additional heat-treatment (heat-setting) for causing further crystallization to increase the stiffness and heat resistance. The heat-treatment is performed at a temperature equal to or higher than a heat-resistant temperature usually required of the shaped container, preferably 100-210 °C, more preferably 150-200 °C.

The heat-treatment time is not particularly restricted but may ordinarily be 1 sec. to 60 min., preferably 2 sec. to 10 min., particularly preferably 5 sec. to 5 min. Heat-treatment for less than 1 sec. may be insufficient in some cases, and a period longer than 60 min. does not provide a substantially different heat-treatment effect but merely results in a longer processing time.

### (Stiffness, Heat resistance)

Through the above-mentioned shaping under heating and optional heat-treatment, the shaped container of the present invention is provided with necessary level of stiffness and heat-resistance.

A desirable level of stiffness of the shaped container may be represented by a flexural modulus Ef of at least 100 kg/mm², particularly at least 150 kg/mm² as measured in a state where a load is applied from the outer resin layer, and also a factor Ef x t of at least 1 kg/mm, particularly at least 2 kg/mm, taking the contribution of the thickness t [mm] into consideration. These values can be also measured, e.g., in the case of sheet forming (shaping), by subjecting a sheet before the shaping to a quantity of heat provided to the sheet during the actual shaping under heating and heat-treatment, then subjecting the heated sheet to the flexure test and applying a correction to the measured values corresponding to a thickness reduction after the shaping.

A desired level of heat-resistance of a shaped container of the present invention may be represented by no visible deformation of the container after placing cooked and cooled rice of ca. 180 cm³ in terms of a dry state volume before the cooking and subjecting the rice in the container to 1 min. of microwave heating at a power of 500 W.

### (Whitening)

The shaped container of the present invention is required to exhibit such a level of whitening resistance as to allow seeing-through of the contents after the shaping under heating. More specifically the shaped container of the present invention is required to exhibit a haze (measured with respect to a cut sheet piece cut out from a side wall of the shaped container according to JIS K6714) of at most 50 %, preferably 20 % or below, more preferably 10 % or below. If the haze is above 50 %, the shaped container is like a frosted glass sheet so that the contents are difficult to judge by seeing- through.

In contrast thereto, a haze of 20 % or below represents a state of frosted glass sheet not providing a difficulty for determination of the contents, and a haze of 10 % or below represents a good see-through of the contents.

### (Use)

The thus-obtained rigid resin shaped container of the present invention is extremely suitably used as a temporary preservation container for food which should desirably have heat-resistance, biodegradability desirable for disposal, stiffness desirable for handling of the container and see-through of the contents, and is also suitably used as a container for medical appliances for which similar properties are desirable, inclusive of heat- resistance for heat-sterilization. Further, in case where the container is shaped into a bottle, the bottle is also suitably used as a container for contents, such as a beverage, disliking degradation with oxygen.

Further, a regrind of the rigid resin shaped container of the present invention may be utilized, because of its stiffness, for providing chopsticks or tooth picks (though these can be made of young wood lumbered for decreasing the wood population), disposable forks, small blown containers for seasonings, small pouches (which be provided with an easy sealability if laminated with a succinic acid-based polyester), "baran" (i.e., a green sheet provided with a pattern of bamboo leaf), etc., attached to a container for box lunch frequently available in convenience stores, and it becomes possible to compose an entire box lunch set of bio- degradable resins. In this instance, these adjuncts can be poor in transparency.

Incidentally, the rigid resin shaped container of the present invention is formed in a shape suitable for accommodating contents, whereas a flat sheet or film having an identical laminate structure can be used as a lid member to be combined with a container of the present invention formed as a bowl or parallelepiped container to form a container accommodating food, etc., capable of microwave heating, by principally utilizing excellent properties, such as gas-barrier property, heat resistance and biodegradability, of the flat sheet or film.

However, such an open bowl or parallel-piped-shaped container of the present invention can also be used in such a manner as to form a temporarily packaged product together with an ordinary food wrapping film, etc., adapted to microwave heating. Further, such a container may also be used as a deep-drawn packaging material for storing a stacked sliced ham utilizing its property of heat-resistance, pinhole-resistance or label adhesion, etc., as desired properties. If such a container is required of sealability with a lid material, it is possible to dispose a layer of succinic acid-based polyester outside or inside thereof.

The shaped container of the present invention can be combined with a biodegradable film provided separately to provide an entirely biodegradable package. Examples of specific structures thereof may include the following:
1) A shaped container of the present invention together with contents is covered with a biodegradable film, and the edges of the film are superposed (wrapped) or further sealing the super-posed edges. The sealing may be performed with opposite edges of one inner surface (palm-to-palm sealing) or edges of inner and outer surfaces (envelope sealing or back seaming). (More details of such packaging embodiments are shown in, e.g., JP-A 3-162262 and JP-B 2991526.)
2) The shaped container of the present invention is formed as a container bottom having a flange portion surfaced with a sealable resin, and after contents being placed therein, a lid member comprising a biodegradable film is sealed onto the flange portion of the container bottom to form a package. (Details of this embodiment are shown in, e.g., JP-A 4-72135.)

In either of the above mentioned embodiments 1) and 2), if the biodegradable film is heat-shrinkable, the package formed in the above-described manner may be passed through a shrink tunnel to shrink the film, thereby providing a beautiful package.

The biodegradable (heat-shrinkable) film may have a layer structure of, e.g., lactic acid polymer/ glycolic acid polymer/ succinic acid-based polyester. An anti-fog agent can be applied on or incorporated in the biodegradable film. Such a biodegradable film may be used instead of a wrapping film ("KUREWRAP", made by Kureha Chemical Industry Co., Ltd). used in Examples described hereinbelow.

### [Examples]

Hereinbelow, the present invention will be described more specifically based on Examples and Comparative Examples.

### (Example 1)

2 g of pellet form polylactic acid ("LACTY", made by Shimadzu Seisakusho K.K.) were placed on a 15 cm-dia and 200 µm-thick amorphous sheet of polyglycolic acid (exhibiting a melt viscosity of 2000 Pa·s at 240 °C and a shear rate of 100/s), and melted in a heat press at 240 °C by preheating for 1 min. and pressing at 5 MPa for 1 min., followed immediately by cooling in iced water to form a 300 *µ* m-thick transparent laminate sheet. After being dried, the thus-obtained sheet was shaped into a 200 *µ* m-thick bowl with an outer layer of the polylactic acid by air-pressure forming. The bowl was supported by a jig so as to retain its shape and, in this state, was heat-treated at 120 °C for 1 min. After the heat treatment, the bowl retained its shape even after the jig was removed. The bowl was then placed in an oven at 100 °C but caused no change in outer appearance or shape whereby heat-resistance thereof was confirmed. The bowl exhibited a haze of 10 % or below throughout the shaping, heat-treatment and oven-treatment.

### (Example 2)

Cooked and cooled rice was placed in the bowl-shaped product of Example 1, and surface-covered with a wrapping film ("KUREWRAP", made by Kureha Chemical Industry Co., Ltd.), and in this state, was heated for 1 min. in a microwave heater. After the heating, the bowl caused no change in outer appearance or strength and could be taken out together with the heated rice while holding the bowl by hands, so that its heat resistance could be confirmed.

### (Comparative Example 1)

7 g of pellet-form polylactic acid (trade name: "LACTY 9030", made by Shimadzu Seisakusho) was melted in a heat press at 240 °C by preheating for 1 min. and pressing at 5 MPa for 1 min., and then immediately cooled in iced water to form a 300 µm-thick single layer sheet. After being dried, the thus-obtained sheet was heated at 240 °C and shaped into a 200 µm-thick bowl by air-pressure forming. The bowl was supported by a jig so as to retain its shape and, in this state, heat-treated at 120 °C for 1 min. As a result, the bowl was softened at 120 °C, and resulted in a shape change after the jig was removed.

### (Comparative Example 2)

A bowl of polylactic acid subjected to heat-treatment in the same manner as in Comparative Example 1 was cooled to room temperature while being supported by the jig, whereby the bowl shape could be retained. Cooked and cooled rice was placed in the bowl after cooling, surface-covered with a wrapping film and then heated for 1 min. in a microwave heater. After the heating, the bowl was deformed, and the heated rice overflowed out of the deformed bowl.

### (Comparative Example 3)

Polyglycolic acid (melt viscosity: 2000 Pa·s at 240 °C and a shear rate of 100/s) was melted in a heat press at 240 °C by preheating for 1 min. and pressing at 5 MPa for 1 min, and then immediately cooled in iced water to form a 250 *µ* m-thick single-layer sheet. After being dried, the thus-obtained sheet was heated at 240 °C and shaped into a 150 µ m-thick bowl by air-pressure forming. The bowl was supported by a jig so as to retain its shape and, in this state, heat-treated at 120 °C for 1 min. The shaped bowl exhibited a haze of 60 %.

### (Example 3)

Polyglycolic acid (PGA), polylactic acid (PLA) (trade name: "LACTY 9030", made by Shimadzu Seisakusho) and ethylene-glycidyl methacrylate copolymer adhesive resin ("BOND FAST EF-E", made by Sumitomo Kagaku Kogyo K.K.) were extruded through a 5-layer T-die extruder to form a transparent multiplayer sheet having a layer structure of PLA/adhesive resin/PGA/adhesive resin/PLA(having thicknesses from the left of 90/10/100/10/90 µm).

The thus-obtained multilayer sheet was heated at 80 °C for 1 min. and then shaped into a 200 µ m-thick bowl by air-pressure forming. After the shaping, the bowl was supported by a jig so as to retain its shape and, in this state, heat-treated at 150 °C for 1 min. In the bowl-shaped rigid container, cooked and cooled rice was placed and surface-covered with a wrapping film, followed by heating for 1 min. in a microwave heater. After the heating, the bowl caused no change in outer appearance or strength and could be taken out together with the heated rice with hands, thus confirming its heat resistance. The bowl exhibited a haze of 9 % after the microwave heating.

### (Example 4)

The 300 µm-thick multilayer sheet obtained in Example 3 was shaped under vacuum at 100 °C for 2 sec. by using a continuous deep drawing machine, whereby a sufficiently transparent 160 µ m-thick lunch box-shaped container could be formed.

Similar vacuum forming was confirmed to be possible by heating in a range of 80- 1 10 °C for 2 sec. After the shaping, the container was supported by a jig so as to retain a rectangular lunch box shape and heat-treated at 150 °C for 1 min. In the lunch box-shaped rigid container after the heat-treatment, cooked and cooled rice was placed and surface-covered with a wrapping film, followed by heating for 1 min. in a microwave heater. After the heating, the lunch box-shaped rigid container caused no change in outer appearance or strength and could be taken out together with the heated rice with hands, thus confirming its heat resistance. The container exhibited a haze of 9 % after the microwave heating.

### (Example 5)

The 300 µm-thick multilayer sheet obtained in Example 3 was examined with respect to melt vacuum formability. As a result, it was confirmed possible to prepare a 160 µ m-thick lunch box-shaped container by using an infrared heater set at 200 °C while adjusting the heating time. After the shaping, the container was supported by a jig so as to retain the rectangular lunch box shape and heat-treated at 150 °C for 1 min. In the lunch box- shaped rigid container after the heat-treatment, cooked and cooled rice was placed and surface-covered with a wrapping film, followed by heating for 1 min. in a microwave heater. After the heating, the lunch box-shaped rigid container caused no change in outer appearance or strength and could be taken out together with the heated rice with hands, thus confirming its heat resistance. The container exhibited a haze of 9 % after the microwave heating.

### [Industrial applicability]

As described above, according to the present invention, there is provided a rigid resin shaped container, which has a laminate structure including a glycolic acid polymer layer and another biodegradable resin layer, is excellent in biodegradability, stiffness and heat-resistance as well as excellent see-through of contents, and is thus suitable as a temporary preservation container for food, etc.

## Claims

1. A shaped container of biodegradable, heat-resistant and rigid resin, having a laminate structure including a glycolic acid polymer layer and another biodegradable resin layer, which has been co-shaped under heating into a shape of an open bowl or parallelepiped so that said another biodegradable resin layer forms at least an outer layer outside the glycolic acid polymer layer, and the resultant container exhibits a flexural modulus EF of at least 980N/ mm² / (100 kg/mm²) as measured in a state where a load is applied from the outer resin layer, wherein said another biodegradable resin is selected from the group consisting of lactic acid polymer, succinic acid-based aliphatic polyester, polycaprolactone, omega -hydroxyacetic acid polycondensate, cellulose and starch.

2. A shaped container according to Claim 1, wherein said outer layer of another biodegradable resin comprises a lactic acid polymer.

3. A shaped container according to Claim 1 or 2, further including said another biodegradable resin layer also as an inner layer disposed inside the glycolic acid polymer layer.

4. A shaped container according to Claim 3, wherein said inner layer of another biodegradable resin comprises a lactic acid polymer.

5. A shaped container according to any of Claims 1 to 4, further including an adhesive layer between the glycolic acid polymer layer and said another biodegradable resin layer.

6. A shaped container according to any of Claims 1 to 5, wherein the glycolic acid polymer layer and another biodegradable resin layer have a total thickness of 100-5000 µm, of which the thickness of the glycolic acid polymer layer occupies 2-98 %.

7. A shaped container according to any of Claims 1 to 6 which has been treated heat-setting after the shaping under heating.

8. A shaped container according to any of Claims 1 - 7, exhibiting a flexural modulus Ef (as measured in a state where a load is applied to the outer resin layer) and a container thickness t giving a product Ef x t of at least 9.8 N/mm (1 kg/mm).

## Patentansprüche

1. Geformter Behälter aus biologisch abbaubarem, wärmebeständigem und starrem Harz, der eine Laminatstruktur hat, die eine Glykolsäurepolymerschicht und eine andere biologisch abbaubare Harzschicht umfasst, die unter Wärme zu einer Form einer offenen Schüssel oder eines Parallelepipeds geformt wurde, derart, dass die andere biologisch abbaubare Harzschicht wenigstens eine äußere Schicht außerhalb der Glykolsäurepolymerschicht bildet und der resultierende Behälter ein Biegemodul EF von wenigstens 980 N/mm² / (100 kg/mm²), wie er in einem Zustand gemessen wird, in dem eine Last von der äuβeren Harzschicht aus aufgebracht wird, aufweist, wobei das andere biologisch abbaubare Harz aus der Gruppe, bestehend aus Milchsäurepolymer, Bernsteinsäure-basiertem aliphatischem Polyester, Polycaprolacton, omega-Hydroxyessigsäure-Polykondensat, Cellulose und Stärke, ausgewählt ist.

2. Geformter Behälter gemäß Anspruch 1, wobei die äußere Schicht aus anderem biologisch abbaubarem Harz ein Milchsäurepolymer umfasst.

3. Geformter Behälter gemäß Anspruch 1 oder 2, der außerdem die andere biologisch abbaubare Harzschicht als eine innere Schicht umfasst, die im Inneren der Glykolsäurepolymerschicht angeordnet ist.

4. Geformter Behälter gemäß Anspruch 3, wobei die innere Schicht aus anderem biologisch abbaubarem Harz ein Milchsäurepolymer umfasst.

5. Geformter Behälter gemäß einem der Ansprüche 1 bis 4, der außerdem eine Klebeschicht zwischen der Glykolsäurepolymerschicht und der anderen biologisch abbaubaren Harzschicht umfasst.

6. Geformter Behälter gemäß einem der Ansprüche 1 bis 5, wobei die Glykolsäurepolymerschicht und die andere biologisch abbaubare Harzschicht eine Gesamtdicke von 100-5000 µm haben, wovon die Dicke der Glykolsäurepolymerschicht 2-98% ausmacht.

7. Geformter Behälter gemäß einem der Ansprüche 1 bis 6, der nach dem Formen unter Wärme durch Wärmefixierung behandelt wurde.

8. Geformter Behälter gemäß einem der Ansprüche 1 bis 7, der einen Biegemodul Ef (wie er in einem Zustand gemessen wird, in dem eine Last auf die äußere Harzschicht angewendet wird) und eine Behälterdicke t aufweist, so dass ein Produkt Ef x t von wenigstens 9,8 N/mm (1 kg/mm) erhalten wird.

## Revendications

1. Contenant profilé réalisé en une résine rigide thermorésistante biodégradable, présentant une structure stratifiée comprenant une couche de polymère d'acide glycolique et une autre couche de résine biodégradable, qui a été co-profilée à la chaleur sous la forme d'un bol ou d'un parallélépipède ouvert, de telle sorte que ladite autre couche de résine biodégradable forme au moins une couche extérieure à l'extérieur de la couche de polymère d'acide glycolique, et le contenant obtenu présente un module de flexion EF d'au moins 980 N/mm² /(100 kg/mm²), mesuré dans un état dans lequel une charge est appliquée à partir de la couche de résine extérieure, dans lequel ladite autre résine biodégradable est sélectionnée dans le groupe constitué par un polymère d'acide lactique, un polyester aliphatique à base d'acide succinique, un polycaprolactone, un polycondensat d'acide oméga-hydroxyacétique, la cellulose et l'amidon.

2. Contenant profilé selon la revendication 1, dans lequel ladite couche extérieure d'une autre résine biodégradable comprend un polymère d'acide lactique.

3. Contenant profilé selon la revendication 1 ou 2, comprenant en outre ladite autre couche de résine biodégradable également comme couche intérieure disposée à l'intérieur de la couche de polymère d'acide glycolique.

4. Contenant profilé selon la revendication 3, dans lequel ladite couche intérieure d'une autre résine biodégradable comprend un polymère d'acide lactique.

5. Contenant profilé selon l'une quelconque des revendications 1 à 4, comprenant en outre une couche adhésive entre la couche de polymère d'acide glycolique et ladite autre couche de résine biodégradable.

6. Contenant profilé selon l'une quelconque des revendications 1 à 5, dans lequel la couche de polymère d'acide glycolique et une autre couche de résine biodégradable présentent une épaisseur totale qui est comprise entre 100 µm et 5000 µm, dont l'épaisseur de la couche de polymère d'acide glycolique occupe entre 2 % et 98 %.

7. Contenant profilé selon l'une quelconque des revendications 1 à 6 qui a été thermodurci après le profilage à la chaleur.

8. Contenant profilé selon l'une quelconque des revendications 1 à 7, présentant un module de flexion Ef (mesuré dans un état dans lequel une charge est appliquée à la couche de résine extérieure), et une épaisseur de contenant t qui donne un produit Ef x t d'au moins 9,8 N/mm (1 kg/mm).
